# FASCICULE DE BREVET EUROPEEN

(11) **EP 1 016 265 B1**
(45) Date de publication et mention de la délivrance du brevet: **27.03.2002**
(21) Numéro de dépôt: 98943958.3
(22) Date de dépôt: 10.09.1998
(51) Int. Cl.: H04N 1/00

(54) **PROCEDE DE TRANSMISSION DE DONNEES ET TERMINAUX POUR LA MISE EN OEUVRE DU PROCEDE**
VERFAHREN ZUR DATENÜBERTRAGUNG UND ENDGERÄTE ZUR DURCHFÜHRUNG DES VERFAHRENS
METHOD FOR DATA TRANSMISSION AND TERMINALS FOR IMPLEMENTING SAME

(30) Priorité: 19.09.1997 FR 9711687; 13.02.1998 FR 9801746; 03.04.1998 FR 9804171
(43) Date de publication de la demande: 05.07.2000
(73) Titulaire: SAGEM S.A., 75116 Paris (FR)
(72) Inventeur: CAZIN, Dominique, F-92150 Suresnes (FR)
(74) Mandataire: Bloch, Gérard
(86) Numéro de dépôt international: FR9801939
(87) Numéro de publication internationale: WO9916236

(56) Documents cités:
- EP-A- 0 615 377
- WO-A-96/41463
- WO-A-97/18665
- WO-A-97/23082
- GB-A- 2 278 518
- NL-C- 1 004 167
- PATENT ABSTRACTS OF JAPAN vol. 018, no. 318 (E-1562), 16 juin 1994 & JP 06 069955 A (KAWASAKI STEEL CORP), 11 mars 1994
- GRONERT E: "KOSTEN SPAREN MIT FAX-LOSUNGEN IM LAN" FUNKSCHAU, vol. 68, no. 2, 5 janvier 1996, page 62/63 XP000554685
- PATENT ABSTRACTS OF JAPAN vol. 097, no. 009, 30 septembre 1997 & JP 09 121274 A (MATSUSHITA GRAPHIC COMMUN SYST INC), 6 mai 1997

## Description

En téléphonie, la transmission de données entre deux terminaux distants se fait généralement à travers un réseau de communication téléphonique ordinaire tel que le réseau RTC (Réseau Téléphonique Commuté), le réseau RNIS (Réseau Numérique à Intégration de Services) ou encore, à titre d'exemple, le réseau de radiotéléphonie GSM.

On peut par exemple citer la transmission de données de télécopie. Le coût de la transmission de la télécopie est par conséquent égal au coût de l'appel téléphonique entre les deux télécopieurs distants, ce coût pouvant être élevé pour les appels à grande distance ou de longue durée.

Afin de réduire ce coût, une solution consiste à transmettre la télécopie à travers un réseau de transmission plus économique que les réseaux de communication ordinaire (RTC, RNIS, etc.), par exemple à travers le réseau de l'Internet.

Les utilisateurs de l'Internet sont généralement reliés au réseau par l'intermédiaire d'un fournisseur de services disposant d'une mémoire de grande capacité et attribuant à chacun de ses clients une fraction de cette mémoire.

Chaque utilisateur peut ainsi recevoir et stocker, dans la fraction de mémoire qui lui est attribuée, des messages, pouvant notamment contenir des télécopies, transmis via l'Internet depuis un utilisateur distant. La fraction de mémoire de l'utilisateur fait ainsi office de boîte à messages que l'utilisateur peut consulter en appelant son fournisseur de services afin de prendre connaissance de la présence et du contenu de messages reçus.

Pour la consultation ou l'émission de messages, le client ne paie, outre le prix du service global, que le coût de la communication avec le fournisseur de services, généralement une communication locale via le réseau téléphonique ordinaire.

Dans le cas où l'adresse de la boîte à messages du télécopieur destinataire n'est pas connue du télécopieur d'émission, celui-ci appelle le télécopieur destinataire de façon classique par le RTC. Il ne peut donc bénéficier des coûts réduits associés à une transmission sur l'Internet.

La présente invention vise, d'une façon générale, à utiliser au mieux les réseaux disponibles, que ce soit en termes de coût ou toute autre caractéristique, telle que technique par exemple.

A cet effet, l'invention concerne tout d'abord un procédé de transmission de données dans lequel un terminal de transmission de données établit une communication avec un terminal correspondant à travers un premier réseau de transmission de données, l'un au moins des deux terminaux transmettant à l'autre, lors de cette communication, une indication sur son accessibilité à travers un deuxième réseau de transmission de données.

Ainsi, l'un des terminaux est informé de la possibilité d'établir avec son correspondant une liaison à travers un deuxième réseau, qui peut être par exemple plus économique ou encore techniquement plus performant. Si le terminal ainsi informé est lui aussi apte à communiquer à travers ce deuxième réseau, il peut donc, par la suite, utiliser de préférence ce deuxième réseau pour appeler son correspondant.

Avantageusement, l'indication comporte une caractéristique pour l'établissement d'une transmission des données, comme par exemple une adresse du terminal dans le deuxième réseau.

Le correspondant peut ainsi être appelé sans devoir rechercher préalablement son adresse.

Avantageusement encore, la caractéristique est une clé de chiffrement de données transmises, par exemple une clé publique.

On peut ainsi personnaliser la présentation des données transmises en fonction du correspondant et de ce fait les protéger.

L'invention concerne aussi un terminal de transmission de données pour la mise en oeuvre du procédé de l'invention, comportant des moyens d'échange de données avec un premier réseau de transmission de données, caractérisé par le fait qu'il comporte des moyens de détection de l'état actif des moyens d'échange, agencés pour activer des moyens de lecture de moyens mémoires contenant une indication de l'accessibilité du terminal à travers un deuxième réseau de transmission de données, les moyens de lecture étant agencés pour commander l'émission de ladite indication par les moyens d'échange.

L'invention concerne enfin un terminal de transmission de données pour la mise en oeuvre du procédé de l'invention, comportant des moyens d'échange de données agencés pour établir une liaison de données à travers un premier réseau de transmission de données, caractérisé par le fait que les moyens d'échange comportent des circuits de réception, depuis le réseau, et de reconnaissance d'une indication, provenant d'un autre terminal, indiquant une aptitude de celui-ci à échanger des données à travers un deuxième réseau de transmission de données, circuits agencés pour transmettre ladite indication à des moyens mémoires de commande de moyens d'établissement d'une liaison de données avec le deuxième réseau.

Bien que le procédé de l'invention nécessite une paire de terminaux appartenant à chacun des deux types ci-dessus, la demanderesse entend protéger spécifiquement l'un et l'autre, puisqu'ils peuvent être mis séparément dans le commerce.

L'invention sera mieux comprise à l'aide de la description suivante d'un mode de réalisation particulier du procédé de transmission de données de l'invention et d'une forme de réalisation particulière de deux terminaux, ici des télécopieurs, pour la mise en oeuvre du procédé, en référence au dessin annexé, sur lequel :
- la figure 1 représente un schéma des différentes étapes du mode de réalisation particulier du procédé de l'invention,
- la figure 2 représente un schéma bloc fonctionnel de l'un des télécopieurs pour la mise en oeuvre du procédé de la figure 1, et
- la figure 3 est un schéma détaillé par blocs de circuits d'échange de données.

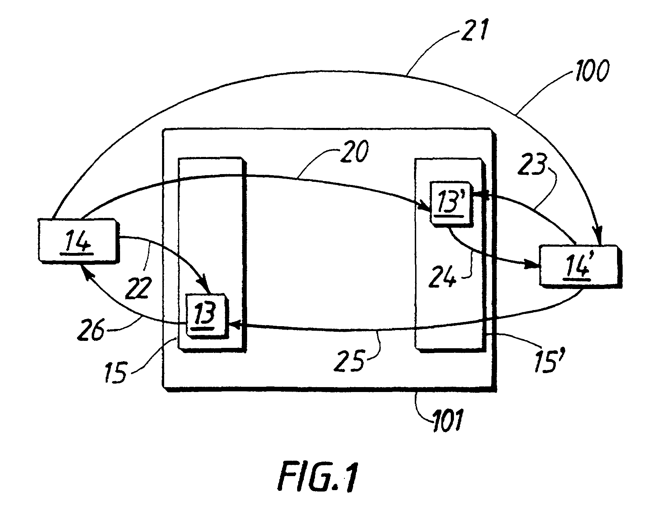

Le procédé de transmission de données de l'invention, illustré sur la figure 1, sert ici à la transmission d'une télécopie entre deux télécopieurs distants 14, 14' via un réseau de transmission, en l'espèce le réseau de l'Internet 101.

Les deux télécopieurs étant identiques, un seul des deux va maintenant être décrit. Par souci de clarté, les éléments correspondants des deux télécopieurs 14, 14' portent les mêmes références respectivement non primées et primées.

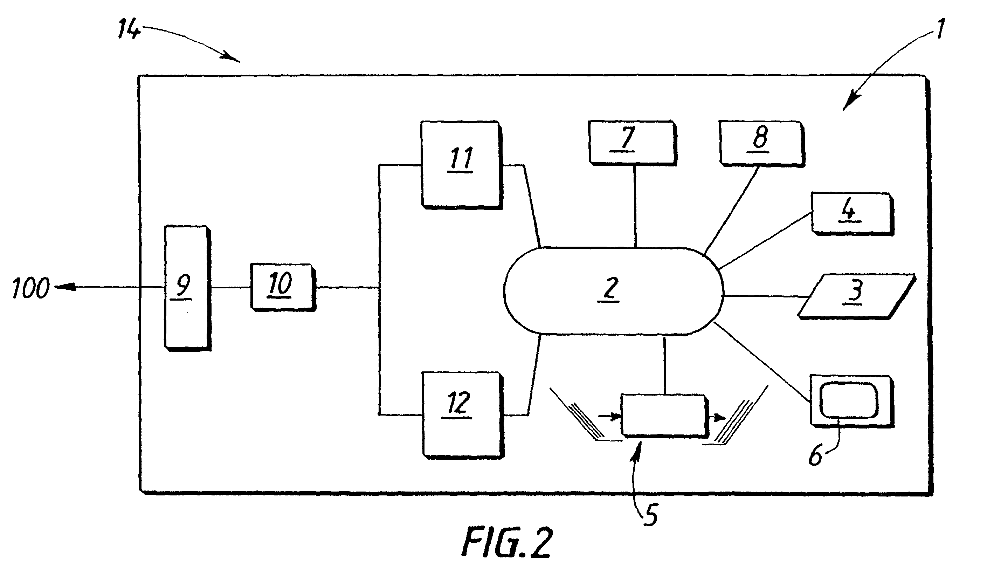

Le télécopieur 14 de la figure 2 comprend un bloc de télécopie ordinaire 1 comportant des éléments classiques de télécopieur : une unité de contrôle 2 à laquelle sont reliés un clavier de saisie 3, un analyseur d'image 4, une imprimante 5, un écran de visualisation 6, une mémoire de télécopie 7 et une mémoire d'appel 8 contenant des numéros de téléphone et des adresses électroniques. Le clavier de saisie 3 est ici un clavier perfectionné, comportant des touches pour les lettres de l'alphabet et des touches de caractères spéciaux pour introduire des adresses électroniques du réseau de l'Internet et pour éditer des messages à transmettre via le réseau de l'Internet, comme cela sera explicité par la suite.

L'unité de contrôle 2 comporte un logiciel d'édition pour créer une télécopie à l'aide du clavier de saisie 3 et de l'écran de visualisation 6.

Le télécopieur 14 est pourvu d'une interface ligne 9 de liaison à un réseau de communication directe, en l'espèce le réseau téléphonique commuté (RTC) 100, ici connectée à un modem 10.

Le télécopieur pourrait également comprendre une autre interface ligne de liaison à un réseau local, du type réseau d'entreprise, relié en permanence au réseau de l'Internet.

Le télécopieur 14 intègre en outre un bloc d'émission 11 et un bloc de réception 12, reliés l'un et l'autre au modem 10 et à l'unité de contrôle 2.

Le bloc d'émission 11 comprend une unité d'exécution 110 commandée par l'unité de contrôle 2, comportant un logiciel permettant d'exécuter un protocole d'émission de télécopie vers un télécopieur distant.

Le bloc de réception 12 comprend également une unité d'exécution 120 commandée par l'unité de contrôle 2, comportant un logiciel permettant d'exécuter un protocole de réception de télécopie.

Le télécopieur 14 est en outre relié, via le réseau RTC, à un centre de connexion au réseau de l'Internet 101, en l'espèce à un fournisseur de services 15.

Le télécopieur 14 dispose, auprès de son fournisseur de services, d'une mémoire externe 13, appelée par la suite "boîte à messages", constituée par une fraction de mémoire de grande capacité du fournisseur de services 15. La boîte à messages 13 a pour attribut une adresse électronique sur le réseau de l'Internet 101 et peut être relié dans les deux sens (22, 26) au terminal 14.

La boîte à messages 13 peut recevoir et contenir une pluralité de messages transmis à travers le réseau de l'Internet 101 par des utilisateurs distants et notamment des télécopieurs du type de la présente description, ayant émis leur message vers l'adresse électronique de la boîte à messages 13.

La transmission de télécopies entre les deux télécopieurs 14, 14' correspondant au fonctionnement des télécopieurs 14, 14' va maintenant être décrite.

Côté émission 14, on crée un document de télécopie à émettre par analyse du document à l'aide de l'analyseur d'image 4 du télécopieur 14, ou à l'aide du logiciel d'édition.

Dans le cas où l'existence ou l'adresse de la boîte 13' n'est pas connue du télécopieur d'émission 14, celui-ci appelle le télécopieur 14' de façon classique par le RTC 100 (liaison 21). Il est ici prévu que le télécopieur appelé 14' fournisse alors en retour, spontanément ou sur demande, lors des échanges initiaux d'informations entre télécopieurs, une information, ou indication, indiquant son accessibilité par un deuxième réseau de transmission de données, ici l'INTERNET 101. Cette indication peut elle-même, ou une caractéristique d'accès, qui y est associée, indiquer qu'il dispose d'une boîte à messages (13'), ou elle fournit directement l'adresse de celle-ci. Cette information peut être transmise au moyen de signaux spécifiques ou par des extensions des trames normalisées DIS, NSF, DCS et NSS de la norme T30 de l'UIT.T, pour l'établissement de la liaison logique entre télécopieurs 14, 14'. Le télécopieur d'émission 14 peut alors mettre à jour un annuaire par écriture de cette adresse du télécopieur correspondant 14'. Le même processus peut de même intervenir au niveau du télécopieur appelé 14', auquel le télécopieur appelant 14 fournit, à titre d'information, une indication de son accessibilité par l'INTERNET 101, cette indication pouvant être sa propre adresse INTERNET. Les caractéristiques techniques, ou capacités télécopie, de transmission de chaque télécopieur (14, 14') peuvent de même être mémorisées dans l'annuaire de l'autre (14', 14), comme par exemple le groupe du télécopieur, indiquant par exemple les définitions d'image qu'il peut traiter ou encore des vitesses d'échange de données.

Le télécopieur d'émission 14 (et de réception 14') peut alors émettre, vers l'autre télécopieur, les télécopies suivantes à travers l'INTERNET 101 d'après l'adresse INTERNET (13', 13) de l'autre télécopieur (14', 14), après avoir mémorisé en annuaire les informations ainsi reçues. Ainsi, le télécopieur 14, ou 14', reçoit et mémorise l'adresse INTERNET de l'autre 14', 14 par le RTC 100 et la réémet, pour appeler, sur l'INTERNET 101 la boîte à messages voulue.

On crée un message destiné à être transmis via le réseau de l'INTERNET 101, en saisissant au clavier 3 les adresses électroniques des boîtes à messages de provenance et de destination du message, ou en les sélectionnant en mémoire, un texte de message et en annexant au message une pièce jointe constituée par le document de télécopie.

Enfin, on saisit au clavier 3 le numéro d'appel, sur le réseau RTC, du fournisseur de services.

L'unité de contrôle 2 du télécopieur d'émission 14 commande alors l'exécution du protocole d'émission par le bloc d'émission 11.

Repartant de l'appel initial classique du télécopieur d'émission 14 au télécopieur correspondant 14' sur le réseau RTC, il peut même être prévu que le télécopieur d'émission 14 déroute la transmission de la télécopie vers l'INTERNET 101 dès qu'il reçoit l'adresse de la boîte 13' ou qu'il l'acquiert après réception de l'indication selon laquelle le télécopieur 14' dispose d'une telle boîte, ou adresse. En pratique, cela peut consister à rompre la communication à travers le RTC 100, qui ne faisait que débuter, pour la rétablir par l'INTERNET 101. Au passage, le télécopieur appelant 14 pourra avoir capté la description complète des capacités télécopie du télécopieur appelé (typiquement la trame DIS du protocole normalisé sur réseau de transmission directe 100, qui précise les formats, codages, résolutions et autres supportés) et pourra, lors du rétablissement de la communication par l'INTERNET 101, les exploiter. Ceci permet de pallier le fait qu'INTERNET ne permet pas au télécopieur appelé 14' d'indiquer ses capacités et donc obligerait le télécopieur appelant 14 à se replier sur les capacités minimales tacites (capacités de base de la norme T4 de l'UIT). Le télécopieur appelant 14 peut donc ici mémoriser ces capacités dans son annuaire et les exploiter ensuite sur l'INTERNET 101.

D'autre part, le télécopieur appelant 14 peut, lorsqu'il rompt automatiquement la communication à travers le RTC 100, ou lorsqu'il reçoit de son opérateur une telle commande, transmettre au télécopieur appelé 14' une commande de déconnexion, à titre d'indication, pour préciser qu'il rompt la liaison (100) en vue de rappeler par déroutage à travers l'INTERNET 101. Le télécopieur appelé 14' peut exploiter cette indication transmise pour consulter automatiquement (liaisons 23,24) sa boîte à messages 13' dans un proche avenir. Cette commande transmise est équivalente à un avertissement d'émission de télécopie ayant ici lieu avant la communication sur l'INTERNET 101, transmis (21) directement par le télécopieur d'émission 14 vers le télécopieur de destination 14', à travers le réseau RTC, avertissement constitué par un signal déterminé destiné à avertir le télécopieur de destination 14' de l'émission du message vers sa boîte à messages 13' à travers le réseau de l'Internet 101.

Outre les capacités du télécopieur 14 (ou 14') liées à ses caractéristiques techniques et à son adresse, il peut aussi être prévu qu'il transmette, à l'autre télécopieur 14' (ou 14), des données représentant une clé de chiffrement dont le télécopieur 14 (ou 14') possède la clé de déchiffrement associée. Les communications suivantes, à destination du télécopieur 14' (ou 14) ayant fait connaître sa clé à son correspondant 14 (ou 14'), peuvent donc être chiffrées par ce dernier au moyen de cette clé et donc déchiffrées sans problème dans le télécopieur correspondant les recevant.

Ainsi, une communication étant établie sur un réseau, l'un au moins des télécopieurs 14, 14' indique à l'autre 14', 14, qu'il peut échanger des données sur un autre réseau et, de préférence, il fournit en même temps tout ou partie de ses caractéristiques qui sont nécessaires à une transmission à travers l'autre réseau. Le télécopieur, ou son opérateur, recevant l'indication évoquée ci-dessus effectue éventuellement une recherche pour obtenir toutes les caractéristiques nécessaires, par exemple l'adresse INTERNET 13, 13', si elle n'a pas été indiquée. Le seul envoi de l'adresse est évidemment en lui-même une indication de l'aptitude à communiquer à travers l'INTERNET.

On conçoit que le procédé s'applique à tous terminaux de transmission de données, puisque les données de télécopie proprement dites de l'exemple détaillé ci-dessus n'interviennent pas dans le procédé.

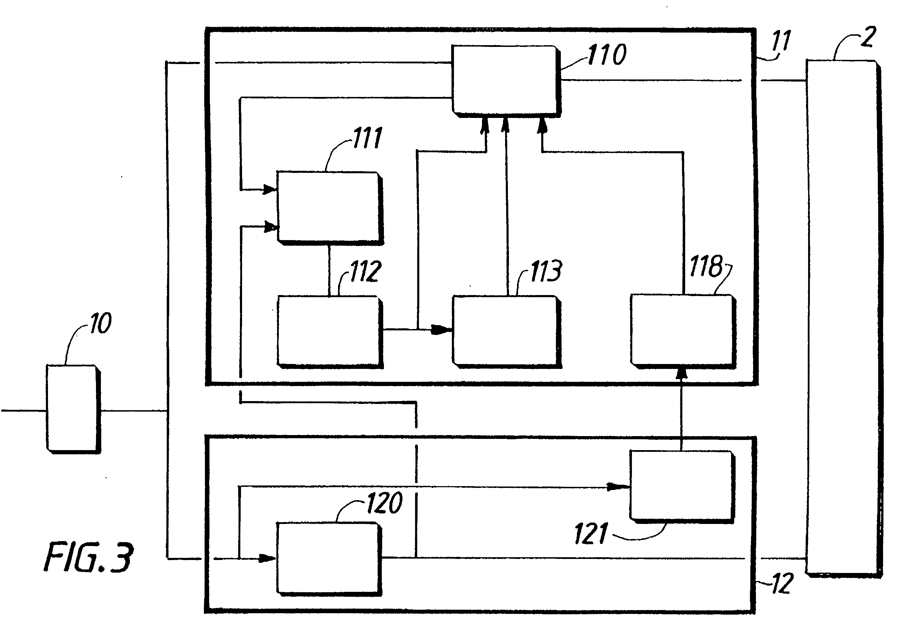

La figure 3 illustre plus en détails les circuits d'échange de données 11 et 12 du télécopieur 14, semblables ici à ceux du télécopieur 14', c'est-à-dire que chaque télécopieur 14, 14' peut émettre l'indication et les caractéristiques correspondantes et, symétriquement, recevoir et mémoriser l'indication et les caractéristiques correspondantes de l'autre télécopieur 14', 14.

En situation de communication RTC de bout en bout entre les deux télécopieurs 14, 14', l'unité 110 exécute le protocole de télécopie T 30, c'est-à-dire transmet en ligne (100) les données de télécopie provenant de l'unité de contrôle 2 dans le cas d'une émission et ne transmet en ligne que des signalisations de réponse dans le cas d'une réception de télécopie. L'unité d'exécution 120 joue le rôle inverse, pour la réception des télécopies.

Les unités d'exécution 110 et 120 sont donc activées localement par une commande de l'unité de contrôle 2, pour une émission, ou téléactivées par la réception d'une télécopie.

C'est dans cette phase d'état actif que le télécopieur 14 va transmettre l'indication ci-dessus avec ses caractéristiques éventuelles. Pour cela, ici dans le bloc 11, un circuit 111 détecte l'état actif des unités d'exécution 110 et 120 et commande un circuit 112 de lecture d'une mémoire 113 contenant l'indication ci-dessus avec, ici, l'adresse INTERNET et une clé de chiffrement, ici publique, dont le terminal 14 possède la clé de déchiffrement secrète complémentaire. Cette représentation du circuit de détection 111 n'a qu'un but d'illustration, car c'est en fait l'unité de contrôle 2 qui gère ou même intègre les unités d'exécution 110 et 120 et qui, donc, les active en émission ou reçoit un appel à travers celles-ci et est donc toujours informée de leur état actif. De même, le circuit de lecture 112 est en fait intégré à l'unité de contrôle 2.

Comme exposé plus haut, l'adresse INTERNET suffit en elle-même comme indication.

En variante, en l'absence d'adresse et de clé, l'indication peut être sous forme de données, ASCII ou autre, indiquant, sous forme reconnaissable (phrase, mot de code connu ou autre), que le terminal 14 est apte à communiquer à travers l' "autre" réseau, ici l'INTERNET 101, à travers une boîte à messages ou directement. L'indication doit, sous forme explicite ou implicite, identifier l' "autre" réseau, puisqu'il peut s'agir, de façon générale, de tout réseau de transmission de données ; il peut en outre être indiqué plusieurs réseaux.

La sortie de la mémoire 113 est appliquée à l'unité d'exécution 110 et le circuit de lecture 112 commande à celle-ci l'émission des données lues en mémoire 113, ici lors des échanges prévus dans le protocole T30, donc ici en début de communication, afin d'en assurer la transmission certaine, puisque le terminal ne maîtrise pas la durée de la communication lorsqu'il est appelé.

Pour la réception de l'indication et des caractéristiques du télécopieur 14', émises par ce dernier à travers le réseau 100, un circuit 121 de reconnaissance d'une telle indication, et des caractéristiques associées, est branché en entrée du bloc 12, en parallèle avec l'unité d'exécution 120, pour transmettre cette indication à une mémoire ou annuaire 118 (équivalent de la mémoire 8) du bloc d'émission 11, commandant l'unité d'exécution 110.

Du fait que la ligne de raccordement du télécopieur 14 au réseau RTC 100 sert aussi à atteindre l'INTERNET 101, l'ensemble de liaison réseaux 11, 12 n'est pas dédoublé dans cet exemple. Il n'en comporte pas moins deux sous-ensembles d'émission-réception chacun, l'un pour le RTC 100 et l'autre pour l'INTERNET 101, qui ont une partie d'interface ligne commune mais qui ont chacun des circuits et/ou des logiciels spécifiques à chaque réseau 100, 101. En particulier, les unités d'exécution 110 et 120 ont toutes deux des logiciels spécifiques pour, d'une part, gérer des liaisons à travers le RTC 100 et, d'autre part, gérer les protocoles d'échange de données sur l'INTERNET 101.

On conçoit qu'il pourrait n'être prévu que des circuits pour quel'indication, avec les caractéristiques éventuellement associées, soit émise, sans prévoir les circuits de réception d'indication (121, 114) et que inversement, le terminal 14' ne comporte que ces derniers (121, 114) sans prévoir les circuits (111, 112, 113) d'émission d'indication correspondants.

## Revendications

1. Procédé de transmission de données dans lequel un terminal (14) de transmission de données établit une communication avec un terminal correspondant (14') à travers un premier réseau de transmission de données (100), l'un au moins des deux terminaux (14, 14') transmettant à l'autre, lors de cette communication, une indication sur son accessibilité à travers un deuxième réseau de transmission de données (101).

2. Procédé selon la revendication 1, dans lequel le terminal transmettant l'indication y associe une caractéristique d'accès.

3. Procédé selon la revendication 2, dans lequel la caractéristique est une adresse (13, 13') du terminal dans le deuxième réseau (101).

4. Procédé selon l'une des revendications 1 à 3, dans lequel le terminal transmet son adresse INTERNET (13, 13') lors d'une communication à travers le réseau téléphonique commuté (100).

5. Procédé selon l'une des revendications 2 et 3, dans lequel la caractéristique est une clé de chiffrement de données à transmettre.

6. Procédé selon la revendication 5, dans lequel la clé est une clé publique.

7. Procédé selon l'une des revendications 1 à 6, dans lequel le terminal (14') émet spontanément l'indication.

8. Procédé selon l'une des revendications 3 à 7, dans lequel, l'un des deux terminaux (14, 14') ayant établi la communication, il déroute la transmission des données vers le deuxième réseau de transmission (101) dès qu'il acquiert l'adresse (13').

9. Procédé selon la revendication 8, dans lequel le terminal (14) transmet à l'autre terminal (14'), avant le déroutement, un avertissement (21) de transmission de message dans le deuxième réseau (101).

10. Procédé selon l'une des revendications 1 à 9, dans lequel un annuaire (114) d'un au moins des terminaux (14; 14') est mis à jour par écriture de l'indication (13'; 13) provenant de l'autre terminal (14'; 14).

11. Procédé selon l'une des revendications 8 à 10, dans lequel, avant déroutement, le terminal correspondant (14') transmet, au terminal ayant établi la communication (14), des caractéristiques de transmission avec lesquelles il est compatible et ce dernier les mémorise dans un annuaire pour adapter son émission après déroutement.

12. Procédé selon l'une des revendications 1 à 11, dans lequel on émet des télécopies.

13. Procédé selon la revendication 12, dans lequel on émet l'indication lors du déroulement d'un protocole (T 30) d'établissement de liaison logique entre télécopieurs.

14. Terminal de transmission de données pour la mise en oeuvre du procédé de la revendication 1, comportant des moyens (110, 120) d'échange de données avec un premier réseau de transmission de données (100), **caractérisé par le fait qu'**il comporte des moyens (111) de détection de l'état actif des moyens d'échange (110, 120), agencés pour activer des moyens (112) de lecture de moyens mémoires (113) contenant une indication de l'accessibilité du terminal à travers un deuxième réseau de transmission de données (101), les moyens de lecture (112) étant agencés pour commander l'émission de ladite indication par les moyens d'échange (110).

15. Terminal de transmission de données pour la mise en oeuvre du procédé de la revendication 1, comportant des moyens d'échange de données (11, 12) avec un premier réseau de transmission de données (100), **caractérisé par le fait que** les moyens d'échange (11, 12) comportent des circuits (121) de réception, depuis le réseau (100), et de reconnaissance d'une indication, provenant d'un autre terminal, indiquant une aptitude de celui-ci à échanger des données à travers un deuxième réseau de transmission de données (101), circuits (121) agencés pour transmettre ladite indication à des moyens mémoires (118) de commande de moyens (110) d'établissement d'une liaison de données avec le deuxième réseau (101).

## Patentansprüche

1. Verfahren zur Datenübertragung, wobei ein Datenübertragungsendgerät (14) über ein erstes Datenübertragungsnetz (100) eine Verbindung zu einem korrespondierenden Endgerät (14') aufbaut, wobei wenigstens eines der Endgeräte (14, 14') während dieser Verbindung an das andere einen Hinweis auf seine Zugänglichkeit über ein zweites Datenübertragungsnetz (101) überträgt.

2. Verfahren nach Anspruch 1, wobei das den Hinweis übertragende Endgerät damit eine Zugangskenngröße verbindet.

3. Verfahren nach Anspruch 2, wobei die Kenngröße eine Adresse (13, 13') des Endgeräts in dem zweiten Netz (101) ist.

4. Verfahren nach einem der Ansprüche 1 bis 3, wobei das Endgerät während einer Verbindung über das Leitungsvermittlungsfernsprechnetz (100) seine INTERNET-Adresse (13, 13') überträgt.

5. Verfahren nach Anspruch 2 oder 3, wobei die Kenngröße ein Chiffrierschlüssel der zu übertragenden Daten ist.

6. Verfahren nach Anspruch 5, wobei der Schlüssel ein öffentlicher Schlüssel ist.

7. Verfahren nach einem der Ansprüche 1 bis 6, wobei das Endgerät (14') den Hinweis spontan sendet.

8. Verfahren nach einem der Ansprüche 3 bis 7, wobei das eine der beiden Endgeräte (14, 14'), nachdem es die Verbindung aufgebaut hat, die Datenübertragung auf das zweite Übertragungsnetz (101) umleitet, sobald es die Adresse (13') erfaßt hat.

9. Verfahren nach Anspruch 8, wobei das Endgerät (14) vor der Umleitung eine Meldung (21) über eine Nachrichtenübertragung über das zweite Netz (101) an das andere Endgerät (14') überträgt.

10. Verfahren nach einem der Ansprüche 1 bis 9, wobei ein Verzeichnis (114) wenigstens eines der Endgeräte (14; 14') durch eine von dem anderen Endgerät (14'; 14) ausgehende Hinweis(13';13)-Schreiboperation aktualisiert wird.

11. Verfahren nach einem der Ansprüche 8 bis 10, wobei das korrespondierende Endgerät (14') vor der Umleitung an das Endgerät (14), das die Verbindung aufgebaut hat, Übertragungskenngrößen überträgt, mit denen es kompatibel ist, und wobei letzteres diese in einem Verzeichnis speichert, um seine Sendung nach der Umleitung anzupassen.

12. Verfahren nach einem der Ansprüche 1 bis 11, wobei Telefaxkopien gesendet werden.

13. Verfahren nach Anspruch 12, wobei der Hinweis beim Ablauf eines Protokolls (T30) zum logischen Verbindungsaufbau zwischen Telefaxgeräten gesendet wird.

14. Endgerät zur Datenübertragung zur Durchführung des Verfahrens nach Anspruch 1, mit Mitteln (110, 120) zum Datenaustausch mit einem ersten Datenübertragungsnetz (100) **dadurch gekennzeichnet, daß** es Mittel (111) zur Detektion eines aktiven Zustands der Austauschmittel (110, 120) aufweist, die derart ausgebildet sind, daß sie Mittel (112) zum Lesen von Speichermitteln (113) aktivieren können, die einen Hinweis auf die Zugänglichkeit des Endgeräts über ein zweites Datenübertragungsnetz (101) enthalten, wobei die Mittel zum Lesen (112) derart ausgebildet sind, daß sie die Sendung des Hinweises durch die Austauschmittel (110) steuern können.

15. Endgerät zur Datenübertragung zur Durchführung des Verfahrens nach Anspruch 1, mit Mitteln zum Datenaustausch (11, 12) mit einem ersten Datenübertragungsnetz (100) **dadurch gekennzeichnet, daß** die Austauschmittel (11, 12) Schaltungen (121) zum Empfang vom Netz (100) und zur Erkennung eines von einem anderen Endgerät ausgehenden Hinweises aufweisen, der dessen Fähigkeit angibt, Daten über ein zweites Datenübertragungsnetz (101) auszutauschen, wobei die Schaltungen (121) derart ausgebildet sind, daß sie den Hinweis an Speichermittel (118) zur Steuerung von Mittel (110) zum Aufbau einer Datenverbindung mit dem zweiten Netz (101) übertragen können.

## Claims

1. Data transmission method wherein a data transmission terminal (14) establishes communication with an associated terminal (14') via a first data transmission network (100), at least one of the two terminals (14, 14') transmitting to the other, during this communication, an indication of its accessibility via a second data transmission network (101).

2. Method according to claim 1, wherein the terminal transmitting the indication associates an access characteristic therewith.

3. Method according to claim 2, wherein the characteristic is an address (13, 13') of the terminal in the second network (101).

4. Method according to any one of claims 1 to 3, wherein the terminal transmits its INTERNET address (13, 13') during communication via the switched telephone network (100).

5. Method according to any one of claims 2 and 3, wherein the characteristic is a key for enciphering data to be transmitted.

6. Method according to claim 5, wherein the key is a public key.

7. Method according to any one of claims 1 to 6, wherein the terminal (14') spontaneously emits the indication.

8. Method according to any one of claims 3 to 7, wherein one of the two terminals (14, 14') having established the communication, it reroutes the transmission of data to the second transmission network (101) upon acquiring the address (13').

9. Method according to claim 8, wherein, before the rerouting, the terminal (14) transmits to the other terminal (14') a warning (21) of transmission of a message on the second network (101).

10. Method according to any one of claims 1 to 9, wherein a directory (114) of at least one of the terminals (14; 14') is updated by writing of the indication (13'; 13) coming from the other terminal (14'; 14).

11. Method according to any one of claims 8 to 10, wherein, before the rerouting, the associated terminal (14') transmits, to the terminal having established the communication (14), transmission characteristics with which it is compatible and this latter terminal stores them in a directory to adapt its emission after rerouting.

12. Method according to any one of claims 1 to 11, wherein facsimile messages are sent.

13. Method according to claim 12, wherein the indication is emitted during carrying out protocol (T 30) for establishment of a logic link between facsimile machines.

14. Data transmission terminal for implementing the method of claim 1, comprising means (110, 120) for exchanging data with a first data transmission network (100), **characterised in that** it comprises means (111) for detecting the active state of the exchange means (110, 120) arranged to activate means (112) for reading memory means (113) containing an indication of the accessibility of the terminal via a second data transmission network (101), the said reading means (112) being arranged to control emission of the said indication by the exchange means (110).

15. Data transmission terminal for implementing the method of claim 1, comprising means for exchanging data (11, 12) with a first data transmission network (100), **characterised in that** the exchange means (11, 12) comprise circuits (121) for reception, from the network (100), and for recognition of an indication coming from another terminal indicating its ability to exchange data via a second data transmission network (101), circuits (121) arranged to transmit the said indication to memory means (118) for controlling means (110) for establishing a data link with the second network (101).
